Europäisches Patentamt

European Patent Office

Office européen des brevets

(11) Publication number : **0 503 978 A2**

(12) **EUROPEAN PATENT APPLICATION**

(21) Application number : **92302231.3**

(22) Date of filing : **16.03.92**

(51) Int. Cl.⁵ : **G10H 1/00**

(30) Priority : **14.03.91 KR 914077**

(43) Date of publication of application :
**16.09.92 Bulletin 92/38**

(84) Designated Contracting States :
**DE FR GB IT**

(71) Applicant : **GOLD STAR CO. LTD**
**20 Yoido-Dong, Youngdungpo-ku**
**Seoul (KR)**

(72) Inventor : **Kim, Myoung Hwan**
**42-4, Songpa-Dong,**
**Songpa-gu, Seoul (KR)**

(74) Representative : **Abnett, Richard Charles**
**REDDIE & GROSE 16 Theobalds Road**
**London WC1X 8PL (GB)**

(54) **Musical data file recording method and reproducing system therefor.**

(57)     A data file recording method and reproducing
system are operative to record musical perform-
ance tune signals in the form of MIDI infor-
mation and a background visual signal on a CD
in order to store a number of tunes. The record-
ing method records sequentially on a CD visual
information comprising the words of a tune by
sections. Musical performance information is
recorded by sections following the visual infor-
mation. The musical performance information
includes a section of MIDI information for play-
ing a measure of a tune, and also special infor-
mation for synchronizing the musical
performance information with the video information for each section. The reproducing sys-
tem comprises a pick-up (12) for a CD (11) to
read-out the data file from the CD, dividing
circuits (14,16) for dividing the data file from the
pick-up into musical performance information
and video information, a sound generator (32)
for generating playing tune signals according to
the musical performance information, and a
video reproducer (40) for reproducing video
signals corresponding to the words of the tune
by processing the visual information from the
dividing circuits. By storing the notes in MIDI
format a very much greater number of tunes can
be held on the CD.

**FIG.1**

## BACKGROUND OF THE INVENTION

This invention relates to a so-called karaoke system including a compact disk player (hereinafter a "CD player") and a sound module and, particularly, to a recording method wherein musical information in addition to a background visual signal are recorded on a CD to store a number of playing tune signals, and to a reproducing system for such a CD.

In this specification the term CD is used to encompass disks of whatever size including 30cm as well as 12cm diameter that use CD-type storage technology.

In general, a CD karaoke system comprises a reproducing system which integrally incorporates a CD player and a sound module to reproduce visual or video signals and audio signals both recorded on the CD. Such a karaoke system comprises signal pick-up means for driving the CD at a constant angular velocity or at a constant linear velocity to read-out from the CD the video signals and audio signals, error correcting means for correcting errors in the read-out signal from the signal pick-up means and for separating the error-corrected signal into a visual or video signal and an audio signal, sound means for processing the separated audio signal from the error-correcting means to output a processed audio signal, and video processing means for processing the separated video signal separated by the error correcting means to output a processed video signal to an external display unit. The video signals and audio signals are recorded on the CD driven by the system in the form of digital signals. The video signals recorded on the CD have real-time visual information which is compressed and processed to minimize the amount of information, but the audio signals include both real-time voice information and tune (or sound) information which is actually being played.

Therefore, a conventional CD cannot store a large quantity of tunes to be played with their visual signals due to the aforesaid reason. If a user wishes to reproduce a large number of tunes and their video signals using a conventional karaoke system, he has frequently to change the CD. There has been a remarkable economic burden in that the user has to purchase many CDs when he wishes to have a large number of tunes available to play.

For example, if the conventional karaoke system drives a large CD of diameter 30cm in a constant linear velocity for 60 minutes in order to reproduce playing tune signals and video signals from the CD, and 5 minutes are spent in reproducing one piece of playing tune signals and video signals, then a CD of diameter 30cm can store on both of its sides only 24 tunes.

## SUMMARY OF THE INVENTION

The invention in its various aspects is defined in the independent claims appended to this description. Preferred features are set forth in the claims appendant thereto.

A preferred data file recording method embodying the present invention comprises the steps of recording consecutively on a CD video information for the words of a tune by sections, and recording consecutively musical performance information by sections following the video information recorded on the CD. The musical performance information includes a section of MIDI (Musical Instrument Digital Interface) information for playing a measure of a tune in the music and special information for synchronizing the musical performance information with the video information for each section.

The data file reproducing system of the preferred embodiment comprises means for driving a CD to read-out the data file from the CD, means for separating the data file from the driving means into musical performance information and video information, means for generating playing tune signals according to the musical performance information from the separating means, and means for reproducing video signals corresponding to the words of the music by processing the video information from the separating means.

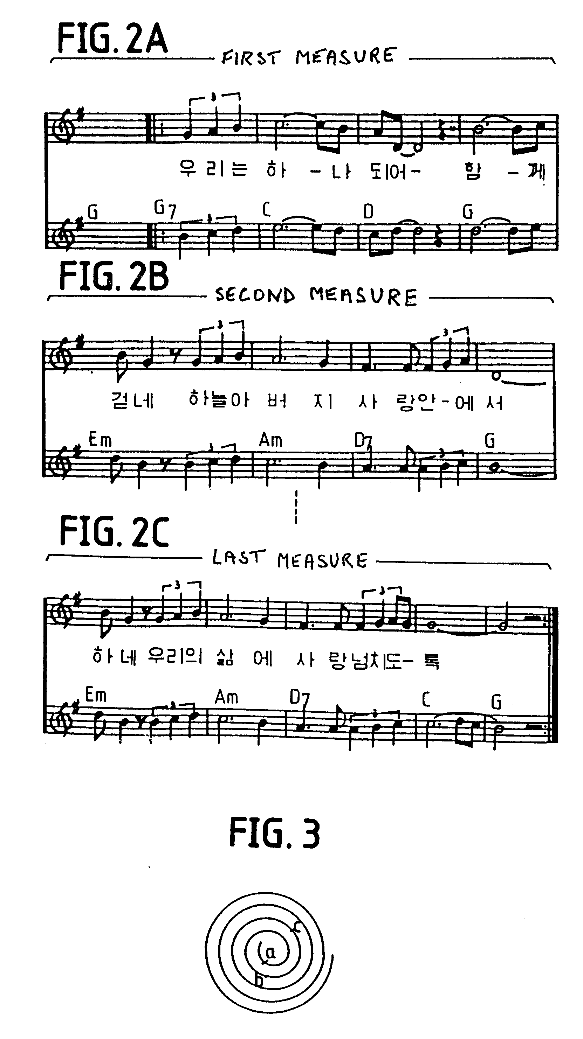

In this specification the word "measure" (current in the United States of America) is used to describe what is known in the United Kingdom as a "bar", i.e., a portion of the music comprising a rhythmic cycle of music defined in standard notation on the musical stave by vertical bar-lines, or more particularly a group of bars such as is indicated in Figures 2A to 2C.

## BRIEF DESCRIPTION OF THE DRAWINGS

The invention will be described in more detail, by way of example, with reference to the accompanying drawings, in which:

**Figure 1** is a schematic block diagram of a preferred karaoke system embodying the present invention;

**Figures 2A to 2C** illustrate examples of sheet music for explaining the recorded format of the MIDI information, with the words of a song written in Korean characters;

**Figures 2D to 2F** illustrate examples of sheet music for explaining the recorded format of the MIDI information, with the words of a song written in the English language;

**Figure 3** illustrates the format of a data file for musical performance information recorded on a CD;

**Figure 4** illustrates the format of the data file for playing a tune;

**Figure 5** illustrates the format of MIDI information for one section or measure;

**Figure 6** illustrates an example of a musical note for explaining the MIDI information;

Figures 7A to 7D are drawings for explaining the format of the MIDI information in Figure 5; and Figures 8A to 8D are drawings for explaining the format of the special information in Figure 5.

## DETAILED DESCRIPTION OF THE PREFERRED EMBODIMENT

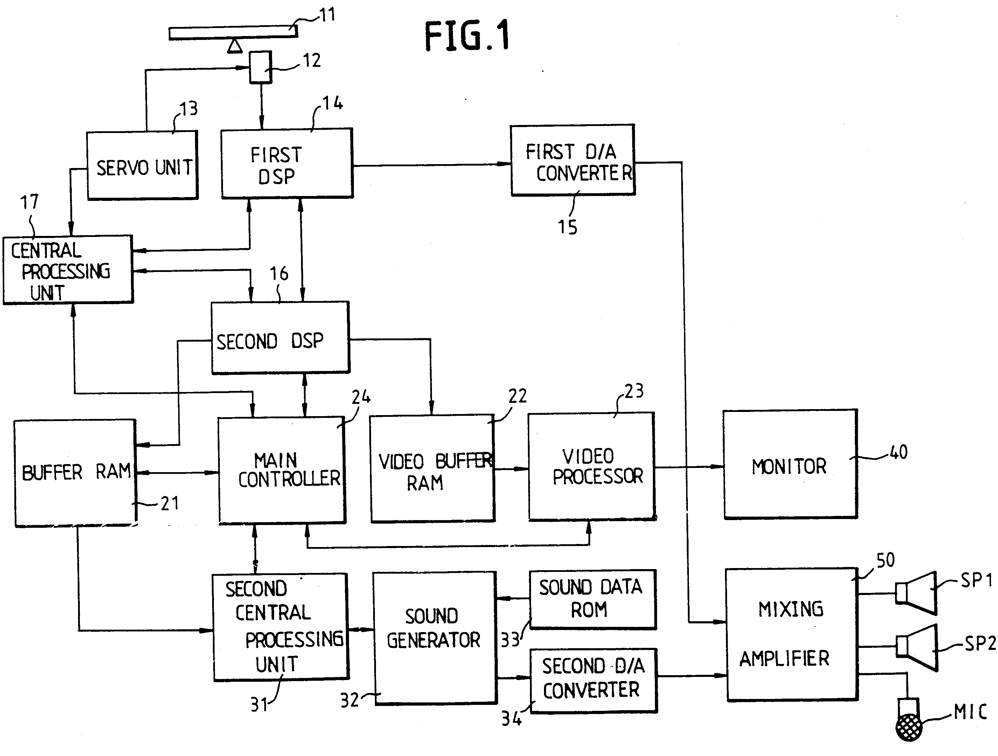

Referring now to the drawings, Figure 1 is a block diagram of a karaoke system embodying the present invention. The karaoke system comprises a compact disk (CD) 11 in which are recorded both visual or video information and also MIDI information for each frame, and a pick-up unit 12 for driving the CD to read-out the information recorded on the CD. Also, the system includes a servo unit 13 for controlling the pick-up unit 12 under the control of a first central processing unit 17, a first DSP (Digital Signal Processor) 14 for receiving the read-out information from the pick-up unit 12 so as to correct errors generated in the read-out information, such as by the Cross Interactive Reed Solomon Code, to ensure the reliability of the CD's real-time processed data. The first DSP also separates the error-corrected information into a data file for musical performance, and audio information. A first digital/analog converter (hereinafter, "D/A converter") 15 converts the audio information from the first DSP 14 into an analog audio signal, and a second DSP 16 corrects errors generated in the data file from the first DSP 14 according to the laser error correction code technique, and separates the error-corrected data file into MIDI information and video information.

The first central processing unit 17 controls the first DSP 14 and the second DSP 16 to correct errors appropriately and simultaneously controls the information output from the first and second DSPs 14 and 16. The system further includes a buffer RAM 21 for receiving the MIDI information from the second DSP 16 and storing the received MIDI information, a video buffer RAM 22, for receiving the visual information from the second DSP 16 and storing the received visual information, a video processor 23 for receiving the visual information from the video buffer RAM 22 to process the received visual information in real-time, and a main controller 24 for controlling the whole system.

Furthermore, the system includes a second central processing unit 31 for performing an overall control function to generate sound which corresponds to the MIDI information received from the buffer RAM 21, a sound generator 32 for reading out sound data from a sound data ROM 33 under the control of the second central processing unit 31 to generate a digital tune signal, a second D/A converter 34 for converting the digital tune signal from the sound generator 32 into an analog tune signal, a monitor 40 for displaying the background video signal output from the video processor 23, and a mixing amplifier 50 for mixing and amplifying the analog audio signal from the first D/A converter 15, the analog tune signal from the second D/A converter 34, and an output signal from a microphone MIC, to output the mixed and amplified signal.

The operation of the karaoke system illustrated in Figure 1 will now be explained.

In a CD on which real-time audio information is recorded, the audio information recorded on the CD is played back by the audio reproducing means comprising the pick-up unit 12, the first DSP 14 and the D/A converter 15.

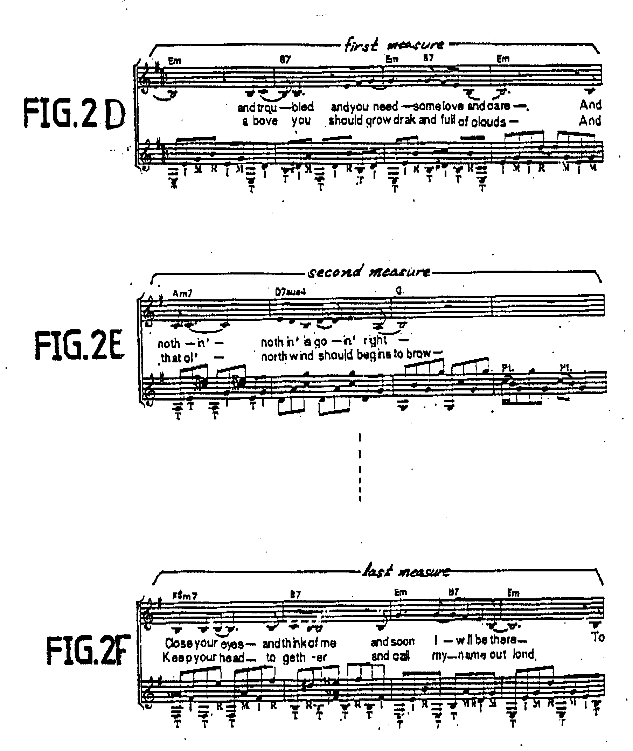

However, in the case of a CD wherein both MIDI (Musical Instrument Digital Interface) information for musical notes and visual information one frame of which corresponds to each measure group of bars of the sheet music are recorded, as exemplified in Figure 2, the pick up unit 12 reads out the MIDI information and the visual information from the CD 11 and provides the read-out information to the first DSP 14. The first DSP 14 corrects errors generated in the read-out information from the pick-up unit 12 and thereafter provides the error-corrected information to the second DSP 16 under the control of the central processing unit 17.

Further, the second DSP 16 corrects errors in the MIDI information and the visual information from the first DSP under the control of the central processing unit 17 and then writes the error-corrected MIDI information into the buffer RAM 21 and stores the error-corrected visual information in the video buffer RAM 22. At the time when the second DSP 16 completes the storage of the MIDI information and the video information, the main controller 24 controls the buffer RAM 21, so that it provides the MIDI information written in buffer RAM 21 in turn to the central processing unit 31 and also controls the video processor 23 according to exclusive or special information contained in the MIDI information from the buffer RAM 21. Under the control of the main controller, the video processor 23 processes the visual information written in the video buffer RAM 22 to generate a video signal in the form of an analog signal and provides the generated video signal to the monitor 40.

Meanwhile, the second central processing unit 31 controls the sound generator 32 in accordance with the MIDI information output from the buffer RAM 21. The sound generator 32, under the control of the second central processing unit 31, reads from the sound data ROM 33 sound data which corresponds to the MIDI information and generates digital tune data by assembling the thus-read sound data. The generated digital tune data from the sound generating unit 32 is provided to speakers SP1 and SP2 via the second D/A converter 34 and the mixing amplifier 50. The speakers SP1 and SP2 output the tune corresponding to the digital tune data. At the same time, a user can sing a song along with the tune being played by using the microphone MIC, while reading the words of the song from the monitor 40.

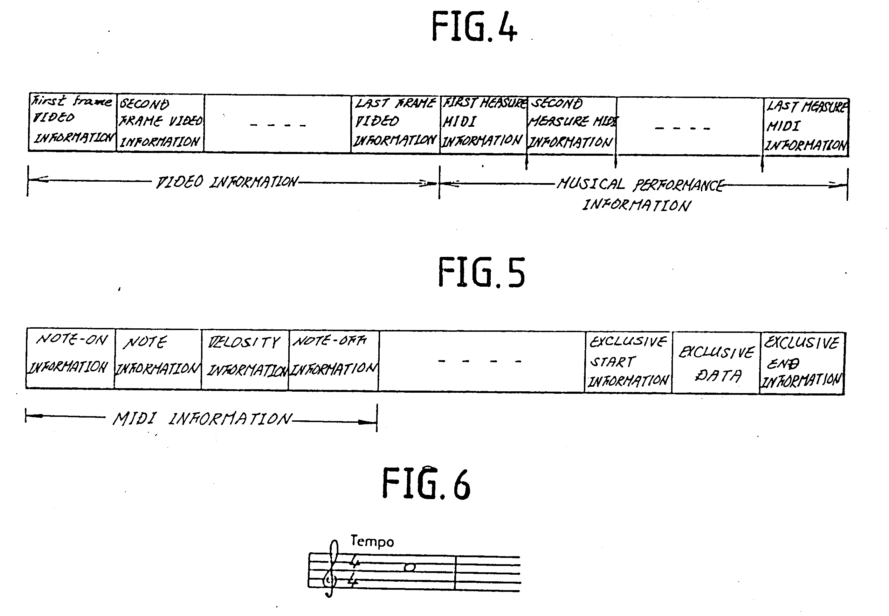

Figure 3 illustrates the format of the visual information and MIDI information contained in the data file which is recorded on a CD. In Figure 3, a plurality of video information frames corresponding to the words classified by each measure of a piece of sheet music as shown in Figures 2A to 2C is written on section a-b. On section b-c musical performance information for the musical notes as shown in Figures 2A to 2C is written. The example shown in Figures 2A to 2C is a song with Korean words. Another example is given in Figures 2D to 2F of a song with English words.

Figure 4 illustrates the format of the video information in the section a-b and the following associated musical performance information in the section b-c, in relation to the sheet music of Figure 2. In Figure 4, visual information comprising in order a first frame, a second frame and so on to a last frame is recorded on section a-b of the CD such as shown in Figure 3. Each frame may comprise the words associated with several bars of the music, as shown in Figure 2. The visual information may be stored as text information. Musical performance information comprising in order a first measure's MIDI information, a second measure's MIDI information, and so on to the last measure's MIDI information is recorded on section b-c of the CD such as shown in Figure 3. Also, special information is added at the point at which the MIDI information of each measure ends (shown by an upward arrow in Figure 4), to match the frames of video information with the measures of MIDI information. The second central processing unit 17 informs the main controller 24 at the end of each measure's MIDI information, where special information is input, that a measure of the tune being played is completed. At that time, the main controller 24 provides to the video processor 23 information representing the termination of a measure of the tune, namely a specific command to the effect that it should prepare the frame of video information to include the following measure. Then, the video processor 23 reads and processes the video information for the following measure from video buffer RAM 22 based on the specific command in order to generate the required video signal, and provides the generated video signal to the monitor 40 and displays it on the monitor.

Figure 5 illustrates the format of the MIDI information for the musical notes of one measure. In Figure 5, the MIDI information, comprising note-on information, note information, velocity information and note-off information, represents the musical note such as shown in Figure 6. Here, the note-on information designates the output start time of the tone to be played and the number of the channel to output the tone. The note information represents the pitch of the tone, and the velocity information represents the intensity of the tone. Lastly, the note-off information designates the output end time of the tone being played and the number of the channel to output the tone. The measure MIDI information includes a great amount of MIDI information, as well as special information arranged after the MIDI information for the last tone to be played in the measure. In the measure MIDI information, the special information comprises special start information, special data and special end information which is a command having the effect that the frame of video information synchronizes with the measure of MIDI information. The special start information represents the start of special data. The special data has the frame number of the frame of visual information for the following measure's words or the frame number of the frame of visual information for the current measure's words in order to initiate preparation of the frame of video information for the words of the following measure. The special end information represents the end of the special data.

Figures 7A to 7D illustrate the formats of the note-on information, note information, velocity information and note-off information.

The initial four bits of the note-on information illustrated in Figure 7A are status bits and "1001" is the start time of the tone to be played; the remaining four bits are for designating the number of the channel to output the tone, such four bits allowing the designation of a maximum of 16 channels. Here, the channels can output differently sounding notes to each other. Typically 8 channels, 4 channels and 4 channels are assigned, respectively, to the melody part, the accompaniment part and the rhythm part, and the tone colour can be varied according to the kind of channel.

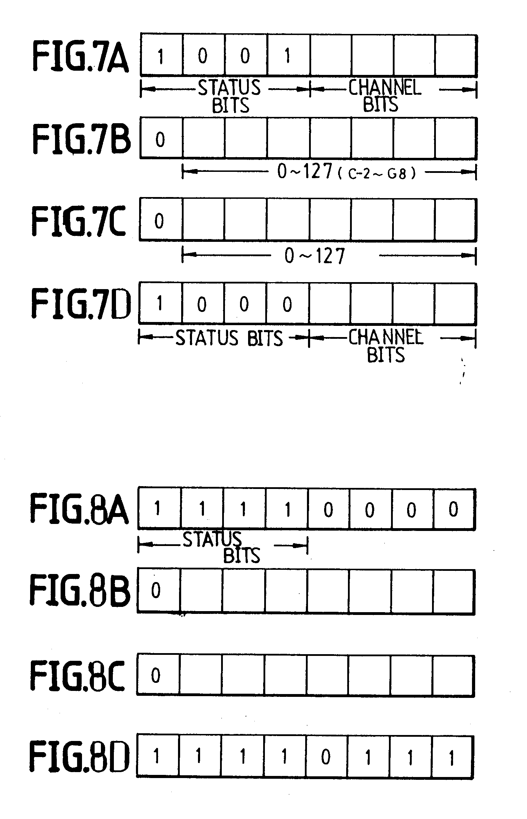

Note information shown in Figure 7B comprises information bits designating the pitch of tone being played, wherein the first bit has the value 0 and the remaining 7 bits represent the pitch between values 0-127. The width of pitch with 128 steps is from C-2 to G8, and in case of pianos they include all of the notes A1 to C7.

Velocity information shown in Figure 7C comprises information bits designating the intensity of a tone being played, wherein the first bit has value 0 and the remaining 7 bits represent the intensity from step 0 to step 127; 0 represents no tone and 127 represents the most intense sound in music (fff).

In the note-off information shown in Figure 7D, the initial 4 bits having the value 1000 represent the end time of the tone and the remaining 4 bits designate the channel number for which the output of the tone is to terminate. In this case, the number of channels capable of being designated is 16.

Accordingly, in the case of playing music using the MIDI information format, MIDI information composed as shown in Figures 7A to 7D is output, and in the case of playing the musical note as shown in Figure 6 in this manner, it is sufficient to have only 4 bytes of memory.

Figures 8A to 8D illustrate the format of the special (or exclusive) information arranged at the end of each measure's MIDI information, namely the special format which directs the video processor to read a frame of video information for the following measure.

First, Figure 8A is the format of the special start information representing the start of the special data. Figure 8B is an information bit representing the identity number of each manufacturing company, namely the identity number which the MIDI Standards Association grants to the manufacturing company where those companies use special information for their unique functions.

Figure 8C illustrates the format of special data. In Figure 8C, the initial bit is 0 and the remaining 7 bits have a predetermined value representing the frame number for the following frame of video information.

Lastly, Figure 8D illustrates a special end information representing the end of special data, wherein the special end information comprises one byte.

The features of the present embodiment comparing real time playing with MIDI playing data file playing are as follows. First, where a musical note as shown in Figure 6 is played in real time in moderato four time C (or common time), the length of the tone being played is approximately 1.5 seconds. And if the note as shown in Figure 6 is recorded at a sampling frequency of 44.1KHz and with 16 bits (2 bytes) per sample, 44.1K * 1.5 * 2 = 132.3 Kbytes of storage capacity is used in the CD. However, where the musical performance information is defined using the MIDI format, as explained aforesaid in relation to Figures 7 and 8, a note written as shown in Figure 6 (one note and one channel) can be recorded on the CD with only a small amount of memory of about 32 bits (4 bytes).

While the system has been described with the MIDI and visual information associated with individual measures of the music, it will be appreciated that it could be associated with groups of measures, or indeed with sections of the music comprising notes grouped together in some other way.

As aforesaid, the present system has advantages in which the amount of information for one piece of music can be reduced to of the order of approximately 30 Kbytes by formatting the music using the MIDI system. In a CD of diameter 12cm capable of storing 540 Mbytes, the video and musical performance information for some 1000 pieces of music can be stored, which results in improved capacity. Another advantage is that users can enjoy playing the music with free option of melody, rhythym and accompaniment by controlling the MIDI channels being played. Also, the present system has the further advantage of application to the musical education field by freely controlling playing tempo and measure tone colour.

## Claims

1. A musical data file recording method, comprising the steps of:

   recording on a CD visual information of the words of a musical song by sections; and

   recording musical performance information by sections associated with the visual information recorded on the CD, said musical performance information including a section of MIDI information for playing a section of a tune in the song and special information for synchronizing the musical performance information with the visual information for each section.

2. A recording method according to claim 1, wherein said MIDI information includes:

   note-on information for designating the output start time of the note and the channel to output the note;

   note information for representing the pitch of the note;

   velocity information for representing the intensity of the note; and

   note-off information for designating the output end time of the note and the channel to terminate the output of the note.

3. A recording method according to claim 1, wherein said special information includes:

   special data including the frame number of the visual information for the words of the music;

   special start information for representing the start of the special data; and

   special end information for representing the end of the special data.

4. A data file recording medium for music comprising:

   visual information including a plurality of frames of visual information for the words of the music, divided by sections;

   musical performance information associated with the video information, said musical performance information including a plurality of MIDI information items for a musical tune divided by sections and special information for synchronizing the section of MIDI information with the frame of visual information.

5. A data file recording medium according to claim 4, wherein said MIDI information items include:

   note-on information for designating the output start time of a musical performance tone and the channel to output the musical performance tone;

   note information for representing the pitch of the musical performance tone;

velocity information for representing the intensity of the musical performance tone; and

note-off information for designating the output end time of the musical performance tone and the channel to terminate the output of the musical performance tone.

6. A data file recording medium according to claim 4, wherein said special information includes:

special data for having the number of the frame video information for the words of the music;

special start information for representing the start of the special data; and

special end information for representing the end of the special data.

7. A data file reproducing system for reproducing a CD having visual and musical performance information, the system comprising:

means for driving the CD to read out a data file recorded on the CD;

means for separating the read-out data file from the driving means into musical performance information and visual information;

playing tune signal generating means for processing the musical performance information from the separating means to generate playing tune signals; and

video reproduction processing means for processing the visual information from the separating means to generate a video signal for the words of the music.

8. A data file reproducing system according to claim 7, wherein said playing tune signal generating means comprises:

first memory means for storing temporarily the musical performance information separated out by the separating means;

second memory means for storing sound data; and

MIDI processing means for decoding the musical performance information stored in the first memory means, and for reading and combining the sound data stored in the second memory means to generate playing tune signals.

9. A data file reproducing system according to claim 8, wherein the video reproducion processing means includes:

third memory means for storing temporarily the visual information separated out by the separating means; and

video processing means for processing the visual information stored in the third memory means to generate the video signal.

10. A data file reproducing system according to claim 9, wherein the second memory means has a capacity capable of storing at least the visual information corresponding to the words of a tune and the first memory means has a capacity capable of storing at least the musical performance information corresponding to the tune.

11. A data file reproducing system according to claim 10, further comprising video matching means for controlling the operation of the video processing means in accordance with special information contained in the musical performance information to synchronize the playing tune signal for the tune with a frame of video signal corresponding to the words of the tune.

12. A data file reproducing system according to claim 11, further comprising:

second separating means coupled to the CD driving means for separating the audio signal from the output signal of the CD driving means and;

mixing means for mixing the audio signal from the second separating means and the playing tune signal from the playing tune signal generating means.

13. A karaoke system comprising means for playing a compact disk, means for separating from the output of the playing means a visual information signal and a musical performance information signal which represents musical notes and values, means for receiving the visual information signal and displaying an image representing the visual information, means for receiving the musical performance information signal and determining from it the musical notes and values represented and for producing a first sound signal representing the thus-determined musical notes and values, and means for combining the first sound signal with a second sound signal to provide an output sound signal.

14. A karaoke system according to claim 13, wherein the second sound signal is received from a microphone.

15. A karaoke system according to claim 13, wherein the musical performance information is in MIDI format.

16. A compact disk, preferably for use in the system of claim 13, having recorded thereon musical performance information recorded in digital format identifying musical notes and values, and visual information associated with the musical performance information.

FIG.1

# FIG.2A

FIRST MEASURE

우 리 는 하 - 나 되어- 함 - 께

# FIG.2B

SECOND MEASURE

걷네 하늘아 버 지 사 랑안-에 서

# FIG.2C

LAST MEASURE

하 네 우리의 삶 에 사 랑넘치도- 록

# FIG.3

FIG.2 D

FIG.2E

FIG.2F

# FIG.4

| First frame VIDEO INFORMATION | SECOND FRAME VIDEO INFORMATION | - - - - | LAST FRAME VIDEO INFORMATION | FIRST MEASURE MIDI INFORMATION | SECOND MEASURE MIDI INFORMATION | - - - - | LAST MEASURE MIDI INFORMATION |
|---|---|---|---|---|---|---|---|

←———————— VIDEO INFORMATION ————————→←——————— MUSICAL PERFORMANCE INFORMATION ———————→

# FIG.5

| NOTE-ON INFORMATION | NOTE INFORMATION | VELOSITY INFORMATION | NOTE-OFF INFORMATION | - - - - | EXCLUSIVE START INFORMATION | EXCLUSIVE DATA | EXCLUSIVE END INFORMATION |
|---|---|---|---|---|---|---|---|

←——————— MIDI INFORMATION ———————→

# FIG.6

Tempo

**FIG.7A**

| 1 | 0 | 0 | 1 |  |  |  |  |
|---|---|---|---|---|---|---|---|

← STATUS BITS → ← CHANNEL BITS →

**FIG.7B**

| 0 |  |  |  |  |  |  |  |
|---|---|---|---|---|---|---|---|

← 0~127 ( C-2~G8 ) →

**FIG.7C**

| 0 |  |  |  |  |  |  |  |
|---|---|---|---|---|---|---|---|

← 0~127 →

**FIG.7D**

| 1 | 0 | 0 | 0 |  |  |  |  |
|---|---|---|---|---|---|---|---|

← STATUS BITS → ← CHANNEL BITS →

**FIG.8A**

| 1 | 1 | 1 | 1 | 0 | 0 | 0 | 0 |
|---|---|---|---|---|---|---|---|

← STATUS BITS →

**FIG.8B**

| 0 |  |  |  |  |  |  |  |
|---|---|---|---|---|---|---|---|

**FIG.8C**

| 0 |  |  |  |  |  |  |  |
|---|---|---|---|---|---|---|---|

**FIG.8D**

| 1 | 1 | 1 | 1 | 0 | 1 | 1 | 1 |
|---|---|---|---|---|---|---|---|